Europäisches Patentamt

European Patent Office

Office européen des brevets

(11) Veröffentlichungsnummer: **0 365 846**

**A1**

(12) **EUROPÄISCHE PATENTANMELDUNG**

(21) Anmeldenummer: 89117712.3

(22) Anmeldetag: 26.09.89

(51) Int. Cl.5: **G01S 15/93 , G01S 15/06 , G01S 15/87**

(30) Priorität: 27.09.88 DE 3832700

(43) Veröffentlichungstag der Anmeldung:
02.05.90 Patentblatt 90/18

(84) Benannte Vertragsstaaten:
**AT BE CH DE ES FR GB IT LI NL SE**

(71) Anmelder: **E.T.R. ELEKTRONIK TECHNOLOGIE RUMP GMBH**
**Heinrich-Hertz-Strasse 2**
**D-4600 Dortmund 50(DE)**

(72) Erfinder: **Rump, Hans**
**Biesenkamp 24**
**D-4750 Unna-Massen(DE)**
Erfinder: **Schulte, Johannes, Dipl.-Ing.**
**Castroper Strasse 86**
**D-4600 Dortmund 15(DE)**
Erfinder: **Hiller, Jörg, Dipl.-Ing.**
**Bollwerk 20**
**D-5802 Wetter 2(DE)**
Erfinder: **Preuss, Reiner, Dipl.-Ing.**
**Am Kucksberg 7**
**D-4600 Dortmund 50(DE)**
Erfinder: **Jeschonnek, Harald, Dipl.-Ing.(FH)**
**Wöschhalde 15**
**D-7730 Villingen-Schwenningen(DE)**
Erfinder: **Schultze, Hartmut**
**Oscar-Joos-Strasse 1**
**D-7730 Villingen-Schwenningen(DE)**

(54) **Apparat und Verfahren zum Zwecke des Kollisions- und Auffahrschutzes von Fahrzeugen.**

(57) Die Erfindung betrifft ein Verfahren einer Vorrichtung zum Zwecke der rückwärtigen Absicherung von Fahrzeugen nach dem Ultraschall-Impuls-Echo-Laufzeit-Verfahren, wobei ein Sensor parallel zur Fahrzeugachse arbeitet, weitere Sensoren um einen bestimmten Betrag verschwenkt sind, wobei die Entfernungsangaben dieser Sensoren rechnerisch so behandelt werden, daß der tatsächliche Abstand zur hinteren Fahrzeugkante näherungsweise richtig ist.

Fig. 1

# Apparat und Verfahren zum Zwecke des Kollisions- und Auffahrschutzes von Fahrzeugen

Erläuterungen:

Es sind zahlreiche Apparate und Verfahren zum Zwecke der Kollisionssicherung von vorzugsweise Kraftfahrzeugen bekannt. In der Regel arbeiten diese Geräte mit Ultraschall, wobei das Ultraschall-Impuls-Echo-Laufzeitverfahren eingesetzt wird.

Dabei sind zum Beispiel am Heck des Fahrzeuges ein oder mehrere Ultraschall-Wandler angeordnet, die regelmäßig Ultraschall-Impulse aussendenf. Befindet ein Objekt im Erfassungsbereich der Ultraschall-Wandler, kommt es zu einem Echo, das innerhalb eines vorgebbaren Zeitfensters ausgewertet werden kann.

Um einen dichten Schutz zu gewährleitsten, daß beispielsweise bei einem LKW eine Heckbreite von 250 cm bedeutet, wird dem Stand der Technik entsprechend nicht ein Wandler eingesetzt, sondern mindestens 2 Wandler finden Verwendung.

Dabei sind Wandler bekannt, die insbesondere horizontal über einen sehr weiten Öffnungswinkel verfügen. Damit wird erreicht, daß ein möglichst großer Erfassungsbereich hinter dem Fahrzeug abgedeckt wird. Dieses an sich wünschenswerte Ziel wird jenoch mit nicht unerheblichen Nachteilen erkauft. Für die Kollisionswarnung ist im Grunde die Distanz zwischen Objekt und rückwärtiger Bordwand interessant, wobei im Regelfall die Entfernung zum Objekt von der Bordwand unter Anlegung eines rechten Winkels angegeben wird.

Es liegt nahe, daß diese Bedingung bei einem Schall-Wandler mit sehr breitem Abstrahlwinkel hier nur im Ausnahmefall gegeben ist. Bei einem Objekt, das vom Ultraschall-Sensor unter einem sehr kleinen Winkel zur Ladebordwand erkannt wird, besteht ein großes Mißverhältnis zwischen der Entfernung zwischen Objekt und Ultraschall-Sensor und der Entfernung zwischen Objekt und rückwärtiger Bordwand. Das Verhältnis läßt sich als Sinus-Funktion des Winkels (8) abgeben, der sich zwischen Sensor, Bordwand und Objekt ergibt.

Es leuchtet ein, daß die Information, daß ein Objekt einen bestimmten Abstand zum Sensor unterschritten hat, unter Berücksichtigung dieser Überlegungen von höchst zweifelhaftem Wert ist.

Ziel der nachstehend beschriebenen Erfindung ist es demnach, ein einfaches und preiswertes Verfahren nebst Apparat zur Durchführung des Verfahrens vorzustellen, daß die oben beschriebenen Nachteile vermeidet oder zumindest erheblich vermindert.

Erfindungsgemäß wird die Aufgabenstellung wie folgt gelöst:

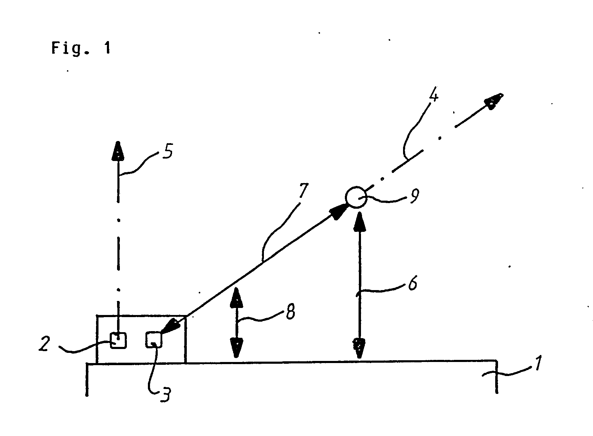

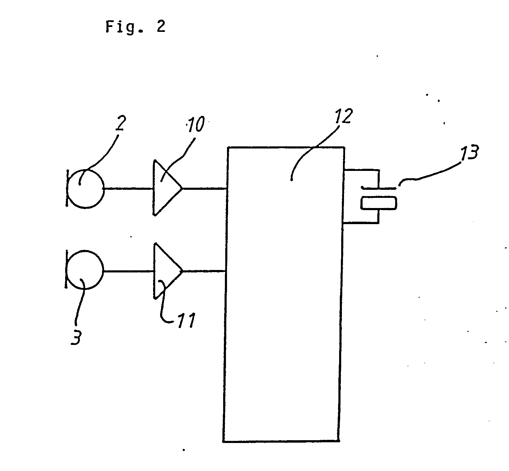

Jeweils in der Nähe der äußeren Begrenzung der LKW-Bordwand (1) befindet sich je ein sogenannter Sensorkopf. Er enthält einen Schall-Wandler (2), der die Richtung der Mittenachse (5) abstrahlt. Dieser Sensor wird als Peripherie-Sensor bezeichnet, weil er den äußeren, peripheren Bereich der Fahrzeugspur abdeckt. Ein weiterer Sensor (3) ist um einen bestimmten Winkel nach innen eingeschwenkt und strahlt in Richtung der Mittenachse (4) ab, die in der bevorzugten Ausführung um 45 Grad zur Bordwand steht. Andere Winkel sind selbstverständlich möglich. Ein Objekt (9) wird von dem Sensor (3) unter den Entfernung (7) erkannt. Der tatsächliche Abstand zur Bordwand ist allerdings die Entfernung (6), die regelmäßig um den Betrag kleiner ist, der dem Sinus-Wert des Winkels (8) zugeordnet ist. Figur 2 zeigt den erfindungsgemäßen Aufbau des Apparates zur Durchführung des Verfahrens. Dem Sensor (2) ist ein eigener Empfangsverstärker (10) zugeordnet. Dem Sensor (3) dagegen ist der Verstärker (11) zugeordnet. Das von den Empfängern aufgenommene Echo-Signal wird verstärkt und in einen digitalen Impuls umgewandelt, der von einem Mikroprozessor (12) getrennt eingelesen und ausgewertet wird. Da bekanntlich die Laufzeit eine Funktion der Entfernung zum Objekt und der Schallgeschwindigkeit in der Luft ist, ist der ermittelte Zeitbetrag zwischen Aussenden des Ultraschall-Impulses und Empfang des Echos ein Maß für die Entfernung zum Objekt. Der Zeitbetrag wird durch Auszählen der Taktfrequenzen des Mikroprozessors gemessen, die mit Hilfe eines Quarzes (13) erzeugt wird.

Während die Entfernung, die der Peripherie-Sensor (2) ermittelt, im Maßstab 1:1 dargestellt wird, wird die Entfernungsangabe des Zentralbereich-Sensors (3) um einen Faktor verkleinert, der sich aus den vorstehend beschriebenen Winkelverhältnissen ergibt.

Ergebnismäßig wird erreicht, daß durch Einsatz von zwei Sensoren je Sensorkopf der sichere Erfassungsbereich zwischen Peripherie und Zentralbereich vergrößert wird. Die Angabe von Warngrenzen erfährt durch die rechnerische Fehlerkorrektur eine erheblich höhere Genauigkeit. Damit kann vorteilhaft auch im Zentralbereich eine Kollisionswarnung erfolgen, was ohne den erfindungsgemäßen Gedanken nicht möglich wäre.

Es ist selbstverständlich denkbar, den Überwachungsbereich in zahlreiche Abschnitte aufzuteilen, die von einer Vielzahl von Sensoren mit jeweils geringen Öffnungswinkel abgedeckt werden. Damit ist es selbstverständlich möglich, die Qualität der Entfernungsangabe zur Hinterkante des Fahrzeugs nachhaltig zu erhöhen. Aus prinzipiellen Gründen ist im Rahmen dieser Erfindung diese Möglichkeit offenbart. Aus praktischen und aus kostenmäßigen Überlegungen wird in der bevorzugten Ausführung die Anzahl der Sensoren auf zwei je Sensorkopf beschränkt bleiben.

## Ansprüche

1.) Vorrichtung und Verfahren zum Zwecke der Absicherung von Objekten, vorzugsweise zum rückwärtigen Kollisonsschutz von Fahrzeugen mit Sensoren, die nach dem Ultraschallimpuls-Echo-Laufzeit-Verfahren arbeiten, dadurch gekennzeichnet, daß mindestens zwei Sensorköpfe eingesetzt werden, die an den äußeren Randbereichen der hinteren Fahrzeugbegrenzung montiert sind, wobei jeder Sensorkopf mindestens zwei Sensoren enthält, von denen einer parallel zur Längstachse des Fahrzeuges abstrahlt (Peripherie-Sensor). Während der oder die weiteren Sensor(en) um einen frei festlegbaren Winkel zur Fahrzeugmitte hin verschwenkt sind (Zentralbereich-Sensor), wobei die Entfernung zu Objekten durch eine Auswerteelektronik nach dem Impuls-Echo-Laufzeitverfahren so festgestellt wird, daß die Entfernung zum Objekt von Peripherie-Sensor unter dem Maßstab 1:1 verarbeitet wird, während die Entfernung vom Objekt zum Zentralbereich-Sensor mit einem Faktor verkleinert ist, der in Abhängigkeit vom Schwenkwinkel (8) festgelegt ist.

2.) Apparat und Verfahren nach Anspruch 1, dadurch gekennzeichnet, daß die Signalverarbeitung zum Zwecke der Ermittlung der Entfernungen zu dem Objekt, von zwei getrennten Auswerteeinheiten durchgeführt werden, wobei diejenige Auswerteeinheit, die den Zentralsensor bearbeitet, als Frequenzuhr einen Taktgenerator besitzt, der im Vergleich zu der gleichen Einrichtung des Peripherie-Sensors um ein bestimmtes Verhältnis langsamer eingestellt ist.

3.) Apparat und Verfahren nach Anspruch 1, dadurch gekennzeichnet, daß die Signalverarbeitung rein digital mit Hilfe eines Mikroprozessors programmgesteuert vorgenommen wird, wobei die unterschiedlichen Auswertungen programmgesteuert und rechnerisch vorgenommen werden.

Fig. 1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 015 232  (Sindle)<br>* Spalte 2 bis Spalte 7; Figuren *<br>--- | 1-3 | G 01 S  15/93<br>G 01 S  15/06<br>G 01 S  15/87 |
| A | DE-A-2 045 234  (Simonsen et al)<br>* insgesamt *<br>--- | 1-3 | |
| A | DE-A-2 045 368  (Mitsubishi)<br>* Figur 5 *<br>----- | 1-3 | |

RECHERCHIERTE SACHGEBIETE (Int. Cl.5)

G 01 S

Der vorliegende Recherchenbericht wurde für alle Patentansprüche erstellt

| Recherchenort | Abschlußdatum der Recherche | Prüfer |
|---|---|---|
| DEN HAAG | 18-01-1990 | DEVINE J.J |